# FASCICULE DE BREVET EUROPEEN

(11) **EP 2 640 566 B1**
(45) Date de publication et mention de la délivrance du brevet: **30.07.2014**
(21) Numéro de dépôt: 11794829.9
(22) Date de dépôt: 17.11.2011
(51) Int. Cl.: B29C 70/44, F16F 1/366, B29C 70/32, B29C 53/12, B29L 31/00

(54) **PROCEDE DE FABRICATION D'UN RESSORT EN MATERIAU COMPOSITE, TEL QU'UN RESSORT DE SUSPENSION NOTAMMENT POUR VEHICULE AUTOMOBILE**
VERFAHREN ZUR HERSTELLUNG EINER FEDER AUS EINEM VERBUNDWERKSTOFF, ETWA EINE AUFHÄNGUNGSFEDER INSBESONDERE FÜR EIN KRAFTFAHRZEUG
PROCESS FOR MANUFACTURING A SPRING MADE OF A COMPOSITE MATERIAL, SUCH AS A SUSPENSION SPRING IN PARTICULAR FOR A MOTOR VEHICLE

(30) Priorité: 19.11.2010 FR 1059501
(43) Date de publication de la demande: 25.09.2013
(73) Titulaire: Peugeot Citroën Automobiles SA, 78140 Vélizy-Villacoublay (FR)
(72) Inventeur: RAOULT, Ida, F-91120 Palaiseau (FR); CARRO, Damien, F-22150 Gausson (FR); MONIN, Martine, F-92000 Nanterre (FR)
(74) Mandataire: Rosenberg, Muriel Sylvie
(86) Numéro de dépôt international: PCT/FR2011/052680
(87) Numéro de publication internationale: WO 2012/066246

(56) Documents cités:
- WO-A1-02/099307
- FR-A1- 2 837 250
- US-A1- 2009 243 174
- US-A1- 2010 148 408

## Description

La présente invention concerne un procédé de fabrication d'un ressort en matériau composite, tel qu'un ressort de suspension notamment pour véhicule automobile.

Un tel procédé permet de fabriquer un ressort de suspension pouvant se substituer aux ressorts métalliques plus lourds et plus vulnérables face à la corrosion. A titre d'exemple, la masse d'un ressort métallique monté sur un véhicule automobile est comprise entre 1,3 kilogramme et 2,5 kilogrammes en fonction du type de véhicule. En comparaison, la masse d'un ressort en matériau composite est comprise entre 0,7 kilogramme et 1,4 kilogramme, soit un gain de masse d'environ 50% par rapport à celle d'un ressort métallique.

Le fil d'un ressort hélicoïdal en matériau composite comprend une âme centrale de fibres, par exemple de verre, pouvant être torsadées, entourée d'une corde de fibres, par exemple en verre, basalte ou carbone, imprégnées de résine thermodure ou thermoplastique et enroulées autour de l'âme en faisant avec l'axe défini par cette âme centrale un angle compris entre ± 45° et ± 60° formant au moins une couche de fibres de corde.

D'une manière générale, les procédés de fabrication d'un tel ressort composite consistent à enrouler le fil composite autour d'un moule intérieur, cet ensemble étant ensuite cuit dans un four à une température de polymérisation de la résine imprégnant les fibres du fil de ressort.

Cependant, ces ressorts ont une forme telle qu'ils emprisonnent le moule intérieur d'une forme, par exemple en tonneau, correspondant à la forme souhaitée du ressort à obtenir et, même lorsqu'ils sont cylindriques, leurs spires sont souvent à pas variable, ce qui interdit le retrait du ressort du moule intérieur par dévissage.

Différentes solutions ont déjà été proposées pour assurer la séparation du ressort en matériau composite du moule intérieur.

L'une d'elles consiste à utiliser un noyau en sable en tant que moule intérieur, mais un tel noyau risque de polluer le polymère du fil en matériau composite du ressort et ne supporte pas les efforts mécaniques liés à l'enroulement du fil de ressort.

Une autre solution consiste à utiliser des moules en plusieurs parties articulées les unes aux autres, mais de tels moules sont difficiles à mettre au point et sont extrêmement onéreux.

Encore une autre solution consiste à utiliser un noyau ou mandrin en un matériau fusible.

Cependant, ce procédé connu à mandrin fusible présente les inconvénients suivantes :
- il nécessite un mandrin à usage unique qui doit être coulé et usiné pour chaque ressort ;
- il est long à mettre en oeuvre puisqu'il nécessite du temps pour le moulage du mandrin, son refroidissement, son usinage pour recevoir le fil du ressort et du temps pour fondre après polymérisation de la résine par cuisson ;
- il est coûteux puisqu'il nécessite un mandrin pour chaque ressort à réaliser ;
- il est dangereux pour les opérateurs qui doivent transporter le mandrin de la zone d'enroulage du fil de ressort au four, de la zone de moulage du fil et de fusion du mandrin à la zone d'usinage du ressort, dans le cas où ces étapes ne sont pas robotisées ; et
- il peut également être dangereux pour l'environnement lorsque le mandrin est réalisé dans un alliage de métaux, dont certains peuvent faire partie d'une liste de substances dangereuses, voire même interdites.

On connaît enfin une solution utilisant en tant que moule intérieur une vessie en un matériau déformable, mais une telle solution a pour inconvénient que le matériau constituant la vessie est trop souple pour permettre l'enroulage et le bon placement du fil dans un moule femelle.

Le document FR-A-2 837 250 décrit un ressort hélicoïdal composite et son procédé de fabrication conformément au préambule de la revendication 1. Il décrit aussi une vessie gonflable selon le préambule de la revendication 8.

La présente invention a pour but de pallier les inconvénients ci-dessus des procédés connus de fabrication d'un ressort en matériau composite.

A cet effet, selon l'invention, le procédé de fabrication d'un ressort en matériau composite, tel qu'un ressort de suspension notamment pour véhicule automobile, consiste à réaliser un fil de fibres imprégnées de résine, pressuriser une vessie gonflable pour la gonfler à une forme du ressort à obtenir et pourvue d'une gorge externe en hélice apte à recevoir le fil de fibres imprégnées de résine, enrouler le fil de fibres imprégnées de résine sur la vessie gonflée en le plaçant dans la gorge en hélice, loger la vessie gonflée sur laquelle est enroulé le fil de fibres imprégnées de résine dans un moule femelle comportant une gorge interne en hélice recevant le fil de fibres imprégnées de résine, pressuriser à nouveau la vessie pour plaquer le fil de fibres imprégnées de résine au fond de la gorge interne du moule femelle, appliquer de la chaleur pour polymériser la résine, dépressuriser la vessie et la retirer du moule femelle, et extraire le ressort de la vessie dépressurisée.

La gorge externe en hélice de la vessie présente en section transversale une forme semi-circulaire faisant saillie de la vessie de façon que la gorge en saillie de la vessie et le fil de fibres imprégnées de résine logé dans cette gorge puissent être reçus dans la gorge interne du moule femelle lorsque la vessie est pressurisée à nouveau dans le moule femelle.

Avantageusement, la vessie est en un matériau élastomère, notamment à base de silicone, apte à supporter la température de polymérisation de la résine imprégnant les fibres du fil.

Le matériau élastomère de la vessie est renforcé par un matériau textile augmentant la raideur de la vessie notamment en direction axiale.

Le moule femelle comporte des évents internes communiquant avec la gorge interne et la face interne du moule femelle et permettant d'évacuer des bulles d'air et/ou un surplus de résine et des ouvertures permettant aux deux extrémités du fil de fibres imprégnées de résine de sortir du moule femelle et qui sont usinées après avoir extrait le ressort de la vessie dépressurisée.

Le moule femelle peut être réalisé en au moins deux coquilles.

L'application de chaleur pour polymériser la résine est effectuée par cuisson dans un four ou par induction lorsque la résine est thermodure ou par chauffage du moule femelle lorsque la résine est thermoplastique.

Un agent de démoulage peut être appliqué sur la face interne du moule femelle et sur la face externe de la vessie ou, pour cette dernière, peut être directement intégré dans la matière de la vessie constituant la gorge externe de la vessie dans laquelle vient en contact le fil de fibres imprégnées de résine.

L'invention vise également une vessie gonflable destinée à la fabrication d'un ressort en matériau composite, tel qu'un ressort de suspension notamment pour véhicule automobile et qui comprend une gorge en hélice réalisée sur sa face externe.

La gorge présente en section transversale une forme semi-circulaire faisant saillie de la face externe de la vessie.

Cette vessie est avantageusement réalisée en un matériau élastomère, notamment à base de silicone.

La vessie peut comporter un matériau textile de renforcement.

L'invention sera mieux comprise, et d'autres buts, caractéristiques, détails et avantages de celle-ci apparaîtront plus clairement dans la description explicative qui va suivre faite en référence aux dessins annexés donnés uniquement à titre d'exemple illustrant un mode de réalisation de l'invention et dans lesquels :
- les figures 1A à 1E représentent les différentes étapes de fabrication d'un ressort de suspension en matériau composite conformément à l'invention ; et
- la figure 2 est une vue agrandie de la partie cerclée en II de la figure 1B.

L'invention va être décrite dans le cadre de la fabrication d'un ressort de suspension en matériau composite pour véhicule automobile, mais il est bien entendu qu'elle peut s'appliquer pour la fabrication de ressorts de suspension utilisés dans d'autres domaines techniques, tels que par exemple le domaine de la literie, ou de tout autre type de ressort.

Un matériau composite est un matériau constitué d'au moins deux constituants dont les qualités respectives se complètent pour former un matériau aux performances globales améliorées.

Ainsi, le fil d'un ressort hélicoïdal en matériau composite comprend une âme centrale de fibres, par exemple de verre, pouvant être torsadées, entourée d'une corde de fibres, par exemple en verre, basalte ou carbone, imprégnées de résine thermodure ou thermoplastique, et enroulées autour de l'âme en faisant avec l'axe défini par cette âme centrale un angle compris entre ± 45° et ± 60° formant au moins une couche de fibres de corde.

Le procédé de fabrication d'un fil en matériau composite d'un ressort de suspension n'a pas à être détaillé du fait qu'il ne fait pas partie de l'invention proprement dite.

En se reportant aux figures, la référence 1 désigne un ressort de suspension hélicoïdal, dont le fil 1a présente en section transversale une forme circulaire et qui, dans le cas présent, présente une forme générale en tonneau, mais il est bien entendu que le ressort 1 peut être du type cylindrique en hélice.

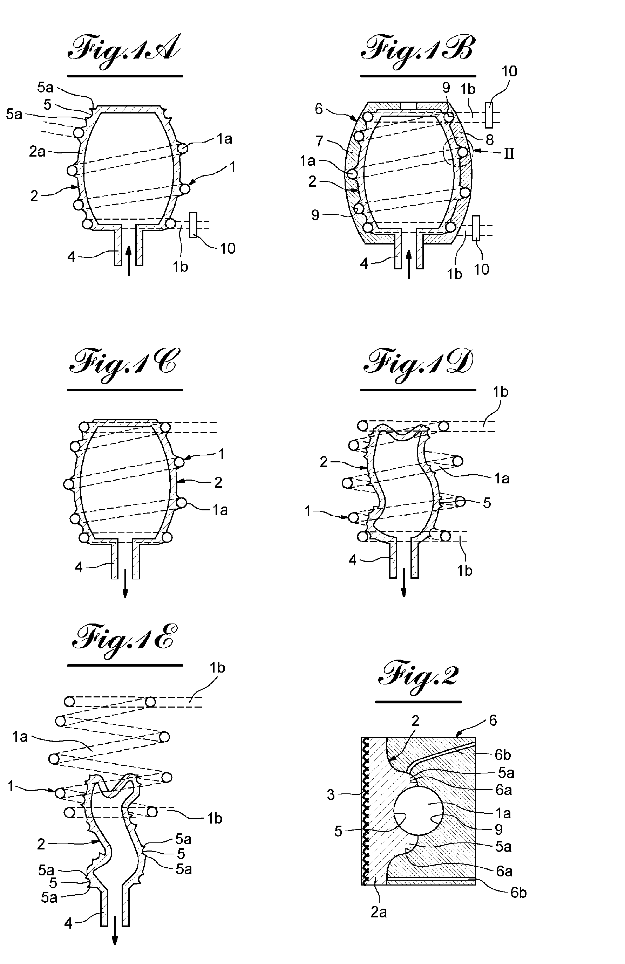

Le procédé de fabrication du ressort 1 conformément à l'invention utilise une vessie gonflable 2 en un matériau déformable, de préférence un matériau élastomère, par exemple à base de silicone, supportant la température de cuisson du ressort comme on le verra ultérieurement et ayant une rigidité suffisante en la gonflant. Avantageusement, la vessie 2 peut être renforcée intérieurement par un matériau textile 3 visible en figure 2 pour augmenter la raideur de la vessie, notamment dans sa direction axiale.

La vessie 2 comprend une tubulure 4 pouvant être raccordée à un dispositif pneumatique ou hydraulique permettant de gonfler et de dégonfler la vessie 2. Ainsi, la vessie 2 peut être gonflée par de l'air sous pression comme cela sera décrit ci-dessous.

La vessie gonflable 2 comprend en outre une gorge externe en hélice 5 réalisée dans la paroi 2a de la vessie 2 et apte à recevoir le fil 1a afin qu'il puisse être enroulé dans la gorge 5 autour de la vessie gonflée 2 pour lui donner la forme du ressort à obtenir.

La gorge externe 5 de la vessie 2 présente en section transversale une forme sensiblement semi-circulaire délimitée par deux parois latérales 5a faisant saillie extérieurement de la vessie 2.

Lorsque le fil 1a du ressort 1 à obtenir est enroulé en hélice dans la gorge 5 de la vessie 2, il fait saillie extérieurement de la gorge 5 sur sensiblement une demi-section circulaire et est retenu dans la gorge 5 par les deux parois latérales incurvées 5a de cette gorge comme cela ressort mieux de la figure 2.

Une fois que le fil 1a du ressort 1 à obtenir a été complètement enroulé autour de la vessie 2 préalablement gonflée, deux extrémités opposées 1b de ce fil sont disponibles en saillie de la vessie 2 et qui correspondent chacune au prolongement de la dernière spire correspondante du ressort à obtenir.

La vessie 2, lorsque gonflée, constitue en quelque sorte un moule mâle de fabrication du ressort 1.

Le procédé de l'invention utilise également un moule femelle rigide 6 en métal qui, comme représenté en figure 1B, constitue une coquille en deux demi-coquilles 7, 8 pouvant être amoviblement fixées l'une à l'autre par tout moyen approprié, tel que par exemple des boulons de fixation, non représentés.

Cependant, le moule femelle 6 peut être réalisé en un nombre différent, supérieur à deux, de portions de coquilles pouvant être assemblées amoviblement les unes aux autres.

Le moule femelle 6 comprend une gorge interne en hélice 9 usinée dans la paroi latérale du moule 6 et présentant en section transversale une forme sensiblement semi-circulaire. Dans le cas présent, la gorge interne en hélice 9 est réalisée dans la paroi de chacune des demi-coquilles du moule 6.

La configuration en hélice de la gorge interne 9 du moule extérieur 6 est la même que celle de la gorge externe 5 de la vessie 52 lorsque cette dernière est gonflée.

Comme cela ressort mieux de la figure 2, la gorge interne 9 du moule extérieur 6 est bordée latéralement respectivement par deux évidements 6a formés dans la paroi latérale du moule extérieur 6 et chacun de forme complémentaire à celle d'une paroi latérale 5a bordant la gorge externe 5 de la vessie 2.

La figure 2 montre également que le moule extérieur 6 est percé d'évents 6b débouchant d'une part à l'extérieur du moule 6 et d'autre part dans au moins chaque évidement interne 6a bordant la gorge interne 9 du moule 6 et dans la face interne du moule 6 sur laquelle vient en appui la face externe de la paroi 2a de la vessie 2 lorsque cette dernière est gonflée dans le moule 6. Ces évents 6b ont pour fonction d'évacuer l'air emprisonné entre les parois latérales 5a de la gorge externe 5 de la vessie et la face interne de la paroi du moule 6 délimitant les évidements 6a ainsi que le surplus de résine indésirable imprégnant les fibres du fil la.

Le moule externe 6 est également pourvu d'ouvertures, non représentées, permettant le passage à l'extérieur du moule 6 des deux extrémités 1b du fil 1a enroulé sur la vessie gonflée 2. De préférence, les deux ouvertures sont réalisées respectivement en haut et en bas du moule 6 au regard de la figure 1B de façon que les deux extrémités 1b du fil 1a sortent du moule 6 parallèlement l'une par rapport à l'autre.

Lors de la fabrication du ressort 1 dans le moule extérieur 6, les deux extrémités 1b du fil 1 enroulé sur la vessie gonflée 2 sont maintenues par un dispositif de fixation représenté schématiquement par la référence 10 et pouvant être constitué par deux pinces hydrauliques.

La figure 1B montre que le moule rigide extérieur 6 présente une forme en tonneau pour réaliser un ressort en tonneau, mais ce moule peut présenter une forme généralement cylindrique pour la réalisation d'un ressort cylindrique.

Le procédé permettant de fabriquer un ressort hélicoïdal en matériau composite ressort déjà de la description qui précède et va être maintenant expliqué.

Tout d'abord, la vessie 2 est préalablement gonflée en injectant dans celle-ci au travers de la tubulure d'entrée 4 de l'air comprimé, la vessie étant gonflée à une forme du ressort à obtenir, dans le cas présent la forme en tonneau comme représenté en figure 1A.

Ensuite, le fil la de fibres imprégnées de résine est enroulé autour de la vessie gonflée 2 en le plaçant dans la gorge en hélice 5 comme représenté en figure 1A. A titre d'exemple, la mise en forme du fil la autour de la vessie gonflée 2 peut s'effectuer en animant cette vessie d'un mouvement de rotation qui tend le fil au fur et à mesure de son enroulement sur le pourtour de la vessie.

Une fois le fil 1a complètement enroulé autour de la vessie gonflée 2, les deux demi-coquilles 7, 8 du moule extérieur 6 sont refermées autour de la vessie gonflée 2 et du fil 1a enroulé sur celle-ci afin de renfermer cet ensemble dans le moule 6. A ce stade, les portions en hélice du fil 1a faisant saillie de la vessie gonflée 2 et les parois latérales en saillie 5a de cette vessie sont logées de façon plus ou moins lâche dans la gorge interne 9 et les évidements internes 6a du moule 6. En outre, les deux extrémités 1b du fil 1a sortant du moule 6 au travers de leurs ouvertures respectives sont alors maintenues par le dispositif de fixation 10.

Ensuite, la vessie gonflée 2 est à nouveau mise sous pression par l'air comprimé introduit dans celle-ci au travers de la tubulure d'entrée 4 pour plaquer les portions en saillie du fil 1a enroulé sur la vessie 2 au fond de la gorge interne 9 du moule 6 et les parois latérales en saillie 5a de la vessie 2 au fond de leurs évidements internes respectifs 5a de ce moule. Cette opération permet d'assurer la mise sous tension des fibres du matériau composite du fil 1a ainsi que le bon placement du fil dans le moule 6 et, par conséquent, d'assurer les bonnes dimensions finales du ressort à obtenir. Cette opération permet également d'évacuer, par le bon placement dans la gorge interne 9 du moule 6 des parois 5a de la vessie 2, des bulles d'air et le surplus de résine imprégnant les fibres du fil 1a au travers des évents respectifs 6b.

L'étape suivante consiste à effectuer par chauffage la polymérisation de la résine imprégnant les fibres du fil 1a. Dans le cas d'une résine thermodure ou thermodurcissable, cette polymérisation peut être réalisée par cuisson de l'ensemble à moule 6 et vessie gonflée 2 pourvue de son fil enroulé 1a dans un four ou une étuve ou par induction de cet ensemble, le métal constituant le moule 6 devant avoir alors une perméabilité magnétique adéquate. Dans le cas d'une résine thermoplastique, le moule 6 peut être chauffé pour fluidifier la résine et faciliter la mise en place des fibres du fil 1a. En tout cas, quelle que soit la méthode de polymérisation à chaud de la résine, le matériau notamment à base de silicone constituant la vessie 2 doit résister aux températures utilisées pour une telle polymérisation.

Une fois la cuisson terminée, la pression dans la vessie 2 est relâchée, puis le moule est ouvert et retiré de la vessie 2 comme représenté aux figures 1C et 1D, le relâchement de cette pression pouvant s'opérer tout simplement en évacuant l'air comprimé dans la vessie 2 au travers de la tubulure 4 à l'aide du dispositif pneumatique dégonflant la vessie 2.

La dépressurisation de la vessie 2 amène cette dernière à se replier sur elle-même comme représenté en figure 1D et elle devient alors suffisamment étroite pour pouvoir être extraite du ressort formé 1 comme représenté en figure 1E.

Enfin, les extrémités 1b du ressort 1 sont usinées comme cela est connu en soi.

Afin de faciliter l'étape de démoulage de la vessie 2 et de son ressort 1, il est envisageable d'utiliser un agent de démoulage dans la face interne du moule 6 et sur la face externe de la vessie 2 voire même, pour cette dernière, d'intégrer l'agent de démoulage directement dans la formulation du matériau élastomère de la vessie, notamment dans la gorge 5 et les parois latérales 5a qui viennent en contact avec le ressort 1.

Ainsi, par rapport au procédé connu à mandrin fusible, il n'est pas nécessaire de tendre le fil de fibres imprégnées de résine en l'enroulant autour de ce mandrin puisque, selon l'invention, la tension du fil de fibres imprégnées de résine enroulé autour de la vessie est assurée ultérieurement par la pressurisation dans le moule 6 de la vessie pourvue de son fil enroulé.

En outre, la vessie 2 n'est pas une simple membrane utilisée pour appliquer une pression à peu près uniforme sur le fil en matériau composite, mais participe également à donner sa forme au ressort 1. Ainsi, la vessie est considérée comme une partie du moule et c'est par l'optimisation de la forme de la gorge 5 à parois latérales 5a que l'on peut obtenir la forme circulaire de la section du fil de ressort, sans écrasement notamment de l'intrados de celle-ci.

Le fait que la vessie soit en un matériau élastomère présente l'intérêt qu'elle est très déformable, ce qui permet de libérer facilement le ressort de cette vessie après polymérisation de la résine dans les fibres du fil de ressort.

Les avantages du procédé de l'invention ci-dessus décrit sont les suivantes :
- il dépense moins d'énergie et est, par conséquent, moins coûteux du fait qu'il évite la mise à température et la fusion d'un mandrin ou noyau métallique ;
- il permet de raccourcir considérablement le temps de cycle de réalisation d'un ressort en matériau composite et, par conséquent, autorise de grandes cadences de fabrication, du fait que le gonflage ou le dégonflage de la vessie est instantané, alors que la préparation du mandrin fusible (fonte, refroidissement, usinage) et sa fusion prennent énormément de temps ;
- il n'est pas nocif à l'environnement contrairement au procédé utilisant le mandrin ou noyau fusible ; et
- il assure une bonne maîtrise de la qualité de la matière du matériau composite constituant le fil de ressort du fait qu'il n'est pas nécessaire de porter ce matériau composite à une température supérieure à sa température de cuisson, contrairement au procédé connu lors de la fonte du métal du mandrin ou noyau.

## Revendications

1. Procédé de fabrication d'un ressort (1) en matériau composite, tel qu'un ressort de suspension notamment pour véhicule automobile, consistant à réaliser un fil (1a) de fibres imprégnées de résine, pressuriser une vessie gonflable (2) pour la gonfler à une forme du ressort à obtenir et pourvue d'une gorge externe en hélice (5) apte à recevoir le fil (1a) de fibres imprégnées de résine, enrouler le fil (1a) de fibres imprégnées de résine sur la vessie gonflée (2) en le plaçant dans la gorge en hélice (5), loger la vessie gonflée (2) sur laquelle est enroulé le fil (1a) de fibres imprégnées de résine dans un moule femelle (6) comportant une gorge interne en hélice (9) recevant le fil (1a) de fibres imprégnées de résine, pressuriser à nouveau la vessie (2) pour plaquer le fil (1a) de fibres imprégnées de résine au fond de la gorge interne (9) du moule femelle (6), appliquer de la chaleur pour polymériser la résine, dépressuriser la vessie (2) et la retirer du moule femelle (6), et extraire le ressort (1) de la vessie dépressurisée (2), **caractérisé en ce que** la gorge externe en hélice (5) de la vessie (2) présente en section transversale une forme semi-circulaire faisant saillie de la vessie (2) de façon que la gorge en saillie de la vessie (2) et le fil (1a) de fibres imprégnées de résine logé dans cette gorge puissent être reçus dans la gorge interne (9) du moule femelle (6) lorsque la vessie (2) est pressurisée à nouveau dans le moule femelle (6).

2. Procédé selon la revendication 1, **caractérisé en ce que** la vessie (2) est en un matériau élastomère, notamment à base de silicone, apte à supporter la température de polymérisation de la résine imprégnant les fibres du fil (1a).

3. Procédé selon la revendication 2, **caractérisé en ce que** le matériau élastomère de la vessie (2) est renforcé par un matériau textile (3) augmentant la raideur de la vessie (2) notamment en direction axiale.

4. Procédé selon l'une quelconque des revendications précédentes, **caractérisé en ce que** le moule femelle (6) comporte des évents internes (6b) communiquant avec la gorge interne (9) et la face interne du moule femelle (6) et permettant d'évacuer des bulles d'air et/ou un surplus de résine et des ouvertures permettant aux deux extrémités (1b) du fil (1a) de fibres imprégnées de résine de sortir du moule femelle (6) et qui sont usinées après avoir extrait le ressort (1) de la vessie dépressurisée (2).

5. Procédé selon l'une quelconque des revendications précédentes, **caractérisé en ce que** le moule femelle (6) est réalisé en au moins deux coquilles (7,8).

6. Procédé selon l'une quelconque des revendications précédentes, **caractérisé en ce que** l'application de chaleur pour polymériser la résine est effectuée par cuisson dans un four ou par induction lorsque la résine est thermodure ou par chauffage du moule femelle (6) lorsque la résine est thermoplastique.

7. Procédé selon l'une des revendications précédentes, **caractérisé en ce qu'**un agent de démoulage est appliqué sur la face interne du moule femelle (6) et sur la face externe de la vessie (2) ou, pour cette dernière, est directement intégré dans la matière de la vessie (2) constituant la gorge externe (5) de la vessie (2) dans laquelle vient en contact le fil (1a) de fibres imprégnées de résine.

8. Vessie gonflable (2) destinée à la fabrication d'un ressort (1) en matériau composite, tel qu'un ressort de suspension notamment pour véhicule automobile, comprenant une gorge en hélice (5) réalisée sur sa face externe, **caractérisée en ce que** la gorge (5) présente en section transversale une forme semi-circulaire faisant saillie de la face externe de la vessie (2).

9. Vessie selon la revendication 8, **caractérisée en ce qu'**elle est réalisée en un matériau élastomère, notamment à base de silicone.

10. Vessie selon la revendication 9, **caractérisée en ce qu'**elle comprend un matériau textile de renforcement (3).

## Patentansprüche

1. Verfahren zum Herstellen einer Feder (1) aus Verbundwerkstoff, wie zum Beispiel einer Aufhängungsfeder für Kraftfahrzeug, das darin besteht, einen Faden (1a) aus Fasern zu bilden, die mit Harz imprägniert sind, einen aufblasbaren Balg (2) mit Druck zu beaufschlagen, um ihn in einer Form der zu erzielenden Feder aufzublasen, und der mit einer externen schraubenförmigen Hohlkehle (5) versehen ist, die geeignet ist, den Faden (1a) aus mit Harz imprägnierten Fasern aufzunehmen, den Faden (1a) aus mit Harz imprägnierten Fasern auf dem aufgeblasenen Balg (2) aufzuwickeln, indem er in die schraubenförmige Hohlkehle (5) platziert wird, den aufgeblasenen Balg (2), auf dem der Faden (1a) aus mit Harz imprägnierten Fasern aufgewickelt ist, in einer Aufnahmeform (6), die eine interne schraubenförmige Hohlkehle (9) aufweist, die den Faden (1a) aus mit Harz imprägnierten Fasern aufnimmt, unterzubringen, den Balg (2) erneut mit Druck zu beaufschlagen, um den Faden (1a) aus mit Harz imprägnierten Fasern auf den Grund der internen Hohlkehle (9) der Aufnahmeform (6) zu drücken, Wärme anzulegen, um das Harz zu polymerisieren, den Druck aus dem Balg (2) abzulassen und ihn aus der Aufnahmeform (6) zu entfernen, die Feder (1) aus dem entlüfteten Balg (2) zu extrahieren, **dadurch gekennzeichnet, dass** die externe schraubenförmige Hohlkehle (5) des Balgs (2) im Querschnitt eine halbkreisförmige Form aufweist, die aus dem Balg (2) derart vorsteht, dass die vorstehende Hohlkehle des Balgs (2) und der Faden (1a) aus mit Harz imprägnierten Fasern, der in dieser Hohlkehle aufgenommen ist, in der internen Hohlkehle (9) der Aufnahmeform (6) aufgenommen werden können, wenn der Balg (2) in der Aufnahmeform (6) erneut mit Druck beaufschlagt wird.

2. Verfahren nach Anspruch 1, **dadurch gekennzeichnet, dass** der Balg (2) aus einem Elastomermaterial besteht, insbesondere auf Silikonbasis, das geeignet ist, um der Polymerisationstemperatur des Harzes, das die Fasern des Fadens (1a) imprägniert, standzuhalten.

3. Verfahren nach Anspruch 2, **dadurch gekennzeichnet, dass** das Elastomermaterial des Balgs (2) durch ein Textilmaterial (3), das die Steifigkeit des Balgs (2) insbesondere in axiale Richtung erhöht, verstärkt ist.

4. Verfahren nach einem der vorhergehenden Ansprüche, **dadurch gekennzeichnet, dass** die Aufnahmeform (6) interne Entlüftungen (6b) aufweist, die mit der internen Hohlkehle (9) und der Innenseite der Aufnahmeform (6) verbunden sind und es erlauben, Luftblasen und/oder übermäßiges Harz abzuleiten, und Öffnungen, die es den zwei Enden (1b) des Fadens (1a) aus mit Harz imprägnierten Fasern erlauben, aus der Aufnahmeform (6) auszutreten, und die nach dem Extrahieren der Feder (1) aus dem abgelassenen Balg (2) bearbeitet werden.

5. Verfahren nach einem der vorhergehenden Ansprüche, **dadurch gekennzeichnet, dass** die Aufnahmeform (6) aus mindestens zwei Schalen (7, 8) ausgebildet ist.

6. Verfahren nach einem der vorhergehenden Ansprüche, **dadurch gekennzeichnet, dass** das Anwenden von Wärme zum Polymerisieren des Harzes durch Brennen in einem Ofen oder, wenn das Harz duroplastisch ist, durch Induktion, oder, wenn das Harz thermoplastisch ist, durch Erhitzen der Aufnahmeform (6) ausgeführt wird.

7. Verfahren nach einem der vorhergehenden Ansprüche, **dadurch gekennzeichnet, dass** ein Abformmittel auf der Innenseite der Aufnahmeform (6) und auf der Außenseite des Balgs (2) aufgebracht wird, oder, für diesen Letzteren, direkt in das Material des Balgs (2), das die externe Hohlkehle (5) des Balgs (2), in der der Faden (1a) aus mit Harz imprägnierten Fasern in Berührung kommt, bildet, integriert wird.

8. Aufblasbarer Balg (2), der zur Herstellung einer Feder (1) aus Verbundwerkstoff, wie zum Beispiel einer Aufhängungsfeder insbesondere für Kraftfahrzeug bestimmt ist, der eine schraubenförmige Hohlkehle (5) aufweist, die auf seiner Außenseite hergestellt ist, **dadurch gekennzeichnet, dass** die Hohlkehle (5) im Querschnitt eine Halbkreisform, die von der Außenfläche des Balgs (2) vorsteht, aufweist.

9. Balg nach Anspruch 8, **dadurch gekennzeichnet, dass** er aus einem Elastomermaterial, insbesondere auf Silikonbasis, ausgebildet ist.

10. Balg nach Anspruch 9, **dadurch gekennzeichnet, dass** er ein Textilverstärkungsmaterial (3) aufweist.

## Claims

1. A process for manufacturing a spring (1) made of a composite material, such as a suspension spring in particular for a motor vehicle, consisting in realizing a yarn (1a) of fibres impregnated with resin, pressurizing an inflatable bladder (2) to inflate it to a shape of a spring to be obtained and provided with an external helical groove (5) able to receive the yarn (1a) of fibres impregnated with resin, winding the yarn (1a) of fibres impregnated with resin on the inflated bladder (2) by placing it in the helical groove (5), housing the inflated bladder (2), on which the yarn (1a) of fibres impregnated with resin is wound, in a female mould (6) comprising an internal helical groove (9) receiving the yarn (1a) of fibres impregnated with resin, pressurizing the bladder (2) again to press the yarn (1a) of fibres impregnated with resin onto the base of the internal groove (9) of the female mould (6), applying heat for polymerising the resin, depressurizing the bladder (2) and removing it from the female mound (6), and extracting the spring (1) from the depressurized bladder (2), **characterized in that** the external helical groove (5) of the bladder (2) has a semi-circular shape in cross-section, projecting from the bladder (2) such that the groove projecting from the bladder (2) and the yarn (1a) of fibres impregnated with resin housed in this groove can be received in the internal groove (9) of the female mould (6) when the bladder (2) is pressurized again in the female mould (6).

2. The process according to Claim 1, **characterized in that** the bladder (2) is made of an elastomer material, in particular silicon-based, able to withstand the polymerisation temperature of the resin impregnating the fibres of the yarn (1a).

3. The process according to Claim 2, **characterized in that** the elastomer material of the bladder (2) is reinforced by a textile material (3) increasing the rigidity of the bladder (2) in particular in axial direction.

4. The process according to any one of the preceding claims, **characterized in that** the female mould (6) comprises internal vents (6b) communicating with the internal groove (9) and the internal face of the female mould (6) and permitting air bubbles and/or a surplus of resin to be evacuated, and openings permitting the two ends (1b) of the yarn (1a) of fibres impregnated with resin to exit from the female mould (6) and which are processed after having extracted the spring (1) from the depressurized bladder (2).

5. The process according to any one of the preceding claims, **characterized in that** the female mould (6) is realized in at least two shells (7, 8).

6. The process according to any one of the preceding claims, **characterized in that** the application of heat for polymerising the resin is carried out by curing in an oven or by induction when the resin is thermoset or by heating of the female mould (6) when the resin is thermoplastic.

7. The process according to one of the preceding claims, **characterized in that** a demoulding agent is applied on the internal face of the female mould (6) and on the external face of the bladder (2) or, for the latter, is directly integrated in the material of the bladder (2) constituting the external groove (5) of the bladder (2) in which the yarn (1a) of fibres impregnated with resin comes into contact.

8. An inflatable bladder (2) intended for the manufacture of a spring (1) of composite material, such as a suspension spring in particular for a motor vehicle, including a helical groove (5) realized on its external face, **characterized in that** the groove (5) has a semi-circular shape in cross-section, projecting from the external face of the bladder (2).

9. The bladder according to Claim 8, **characterized in that** it is realized from an elastomer material, in particular silicon-based.

10. The bladder according to Claim 9, **characterized in that** it includes a textile reinforcement material (3).
